# EUROPÄISCHE PATENTSCHRIFT

(11) **EP 1 012 350 B1**
(45) Veröffentlichungstag und Bekanntmachung des Hinweises auf die Patenterteilung: **09.06.2004**
(21) Anmeldenummer: 98941138.4
(22) Anmeldetag: 28.08.1998
(51) Int. Cl.: C22B 11/00, C22B 3/42, C22B 11/06, B01D 15/08, B01J 39/06

(54) **VERFAHREN ZUM AUFARBEITEN VON EDELMETALLHALTIGEN MATERIALIEN MIT CHROMATOGRAPHISCHER ABTRENNUNG UND FRAKTIONIERUNG**
METHOD FOR REPROCESSING MATERIALS CONTAINING PRECIOUS METALS BY MEANS OF CHROMATOGRAPHIC SEPARATION AND FRACTIONATION
PROCEDE PERMETTANT DE RETRAITER DES MATERIAUX CONTENANT DES METAUX PRECIEUX PAR SEPARATION ET FRACTIONNEMENT CHROMATOGRAPHIQUES

(30) Priorität: 11.09.1997 AT 153497
(43) Veröffentlichungstag der Anmeldung: 28.06.2000
(73) Patentinhaber: PRIOR ENGINEERING AG, 8008 Zürich (CH)
(72) Erfinder: PRIOR, Adalbert, A-6841 Götzis (AT)
(74) Vertreter: Häupl, Armin, Dipl.-Ing.
(86) Internationale Anmeldenummer: PCT/AT1998/000206
(87) Internationale Veröffentlichungsnummer: WO 1999/013115

(56) Entgegenhaltungen:
- EP-A- 0 048 103
- EP-A- 0 371 648
- EP-A- 0 408 185
- EP-A- 0 756 013
- WO-A-96/17097
- US-A- 4 885 143
- LI XIMING ET AL.: "Chlorine leaching of gold-bearing sulphide concentrate and its calcine" HYDROMETALLURGY, Bd. 29, Nr. 1/3, Juni 1992, Seiten 205-215, XP000384550 Amsterdam, NL
- DATABASE WPI Section Ch, Week 9426 Derwent Publications Ltd., London, GB; Class A13, AN 94-215944 XP002087176 & SU 1 810 354 A (KEMER KARBOLIT SCI PRODN ASSOC), 23. April 1993
- DATABASE WPI Section Ch, Week 9822 Derwent Publications Ltd., London, GB; Class A91, AN 98-249669 XP002087177 & RU 2 092 597 C (SHISHKIN D N) , 10. Oktober 1997

## Beschreibung

Die Erfindung betrifft ein Verfahren zum Aufarbeiten von edelmetallhaltigen Materialien, insbesondere von metallurgischen Primärkonzentraten, bei dem die Materialien bei erhöhter Temperatur in der Reihenfolge einer oxidierenden Behandlung, einer reduzierenden Behandlung und einer Chlorierung unter Einsatz von gasförmigen Behandlungsmedien unterzogen werden, wobei Gold und die Platingruppenmetalle im Rückstand verbleiben.

Dieses Verfahren wird in Fachkreisen als Chloroxomatverfahren bezeichnet und in der WO 96/17097 beschrieben. Dabei geht es darum, aus gold- und platingruppenmetallhaltigen Rohmaterialien die Begleitmetalle und andere Beimischungen in der Gasphase zu entfernen, sodaß letztlich ein Rückstand bleibt, in dem Gold und die Platingruppenmetalle angereichert sind. Die Rohmaterialien sind üblicherweise Konzentrate aus der Ni-, Cu- oder Zn-Verhüttung und enthalten z.B. S, Se, Ag, Te, Cu, Ni, As, Sb und Pb als Begleitmetalle bzw. Verunreingung. Zuerst wird das Material mit oxidierendem Gas (Sauerstoff oder sauerstoffhaltige Gasmischung wie z.B. 20 % O₂ in Inertgas oder in Luft) bei 200 bis 800, vorzugsweise 400 bis 500°C behandelt, wobei vor allem S und Se entfernt werden, aber auch Metalloxide gebildet und flüchtige Sauerstoffverbindungen entfernt.

Nach Spülen mit Inertgas, z.:B. mit N₂ und/oder CO₂, wird mit reduzierendem Gas (Wasserstoff bzw. wasserstoffhältiges Gas wie z.B. Stickstoff mit zumindest 1 % H₂) bei 200 bis 1000, vorzugsweise 600 bis 800°C behandelt, vor allem um vorher gebildete Metalloxide wieder zum Metall zu reduzieren. Anschließend kann wieder mit Inertgas gespült werden und als Abschluß wird mit Chlorgas bei 800 bis 1300, vorzugsweise 900 bis 1150°C chloriert, wobei flüchtige Chloride (z.B. von Cu, Ni, Ag) entweichen. Nach dem Abkühlen des Materials wird gewaschen, um nichtflüchtige Chloride zu entfernen und man erhält einen Rückstand, der ein Konzentrat von Gold und Platingruppenmetallen ist, das auch z.B. SiO₂ enthält.

Gemäß der Erfindung ist vorgesehen, daß der Rückstand des wie angegeben vorbehandelten Materials in bekannter Weise einer oxidierenden Säurelaugung unterzogen, aus der flüssigen Phase zuerst der Goldanteil chromatographisch abgetrennt und die verbleibende Flüssigkeit dann chromatographisch in die einzelnen Platingruppenmetalle fraktioniert wird, wobei die Fraktionierung unter Relativbewegung zwischen einem Teilchenbett in Form eines Zylindermantels und mindestens einer Aufgabestelle für die Flüssigkeit durchgeführt und die verbleibende Flüssigkeit vor der Fraktionierung auf ein Redoxpotential größer als 700 mV oxidiert wird. Nach einem bevorzugten Kennzeichen der Erfindung wird auf ein Redoxpotential von 800 bis 1200 mV oxidiert. Weitere Kennzeichen sind den Patentansprüchen zu entnehmen.

Die oxidierende Säurelaugung wird vorteilhaft mit chlorgashältiger Salzsäure durchgeführt, oder aber z.B. mit Salzsäure und H₂O₂ oder wie üblich mit Königswasser, wobei Gold und die Platingruppenmetalle in Lösung gehen. Eine derartige oxidierende Säurelaugung eines vorher nicht aufgeschlossenen Edelmetallkonzentrates mit dem Ziel, Gold, Platin und Palladium zu lösen, ist aus der EPA 0 048 103 bekannt.

Aus der bei der oxidierenden Säurelaugung erhaltenen flüssigen Phase wird zuerst in bekannter Weise der Goldanteil chromatographisch abgetrennt. Als goldselektive lonentauscherharze sind Vinylstyrolharze bekannt, insbesondere Amberlite XAD7. Gold an derartigen lonentauschern abzutrennen, ist aus der EP-A 0 408 185 und der US-A 4 885 143 bekannt. Gemäß der US-A 4 885 143 wird nach der Goldabtrennung eine Lösung von Platingruppenmetallen erhalten, die nicht oxidiert wird und chromatographisch in der Reihenfolge Ru, Rh, Rd, Rt, Jr und Os aufgetrennt wird.

Beim erfindungsgemäßen Verfahren wird anschließend an die Goldabscheidung die verbleibende Flüssigkeit hingegen oxidiert und chromatographisch in die einzelnen Platingruppenmetalle fraktioniert, wobei die Fraktionierung unter Relativbewegung zwischen einem Teilchenbett in Form eines Zylindermantels und mindestens einer Aufgabestelle für die Flüssigkeit durchgeführt wird.

Die Chromatographietechnik, bei der eine Relativbewegung zwischen einem Teilchenbett in Form eines aufrecht stehenden Zylindermantels und mindestens einer an dessen Kopf angeordneten Aufgabestelle für flüssiges Beschickungsmaterial vorgesehen ist, die einzelnen Komponenten in Spiralbahnen das Teilchenmaterial durchlaufen und entlang des unteren Zylindermantelumfangs in verschiedenen Umfangsbereichen gleichzeitig austreten, ist ein kontinuierliches Verfahren und wird annulare Chromatographie genannt. Die kontinuierliche annulare Chromatographie wird international mit CAC abgekürzt.

Dabei sind für die CAC sowohl Vorrichtungen bekannt, bei denen das Teilchenbett stillsteht, als auch solche, bei denen das Teilchenbett gegenüber Aufgabestelle(n) und Auffangstellen rotiert. Als Beispiel einer Literaturstelle, die Vorrichtungen des zweiten Typs im Detail beschreibt sowie einen Überblick über die verschiedensten chromatographischen Methoden bietet, wird die EP-A 371 648 der Union Oil of California genannt.

Es wurde überraschenderweise gefunden, daß diese Technik in Kombination mit dem Chloroxomatverfahren nicht nur ausgezeichnete Produktausbeuten, sondern auch ausgezeichnete Trennleistung ergibt.

Als besonder geeignet zum Fraktionieren der Platingruppenmetalle sind organische Ionentauscher in Form makroporöser sphärischer Gele, insbesondere solche auf Basis von 1) Polysacchariden vom Dextrantyp, 2) vernetzten Polymethacrylaten und 3) vernetzten Polyacrylamiden.

Als Beispiel für unter 1) genannte Produkte werden die Sephadex G Ionentauscher der Pharmacia (Schweden) angegeben, die mit Epichlorhydrin vernetzte Dextrane sind. Als Beispiel für unter 2) genannte Produkte werden die Toyopearl HW Ionentauscher der Tosohaas (Japan, USA) angegeben, die mit Äthylenglykol vernetzte Polymethylacrylate sind. Als Beispiel für unter 3) genannte Produkte werden die Biogel P lonentauscher der Biorad (USA) angegeben, die Copolymerisate von Acrylamid mit N,N'methylen-bisacrylamid sind.

Bei der ersten Stufe des erfindungsgemäßen Verfahrens, der Gasphasenbehandlung des Ausgangsmaterials, tritt ein Gewichtsverlust von 30 bis 35 % auf - dabei werden etwa 95 % Begleitmetalle entfernt. Unvermeidlich ist dabei auch ein Goldverlust von etwa 2 % und ein Palladiumverlust von 0,5 bis 1 %.

Bei der nachfolgenden chromatographischen Goldabscheidung und chromatographischen Platingruppenmetallfraktionierung treten praktisch keine Verluste auf - der Edelmetallgehait der Säuleneffluents liegt unter 50 ppm, wobei natürlich die Effluents rückgeführt werden.

Für die CAC-Fraktionierung der Platingruppenmetalle wird den Feed auf ein Oxidationspotential von mindestens 700 mU, insbesondere von 800 bis 1200 mU, gebracht, um sicherzustellen, daß Ir^{III} in Ir^{IV} umgewandelt ist. Diese Oxidation kann wie üblich chemisch, oder aber elektrochemisch im Feederkopf der CAC-Säule erfolgen (anodische Oxidation).

### Beispiel

### Ausgangsprodukt: Edelmetallkonzentrat "Impala Fe-Grain"

1) Chloroxomatstufe: Feingemahlenes Konzentrat wurde mit 1,56 Gew.-% Maisstärke pelletiert. Die Pellets wurden unter Gasspülung wie folgt wärmebehandelt:

**Tabelle 1**

| Zeit (min.) | Gas | Strömungsrate (l/h) | Temperatur (°C) |
|---|---|---|---|
| - 15 (Aufheizen) | N₂ | 15 | 450 |
| - 15 | N₂ | 15 | 450 |
| - 15 | N₂/H₂ | 15 (jeweils) | 550 |
| - 15 | N₂ | 15 | 550 |
| - 30 | O₂ | 25 | 550 |
| - 15 | N₂ | 15 | 850 |
| - 45 | N₂/H₂ | 15 (jeweils) | 850 |
| - 10 (Aufheizen) | N₂ | 15 | 1050 |
| - 160 | Cl₂/ N₂ | Fußnote | 1050 |
| - 15 | N₂ | 15 | 800 |
| - 15 | N₂/H₂ | 15 (jeweils) | 800 |
| - 90 | N₂ | 10 | Raumtemperatur |
| Fußnote: 30 min lang N₂:Cl₂ = 15:25 l/h, dann 130 min lang Cl₂ jeweils 5 min lang mit 16 l/h, dazwischen jeweils N₂ 1 min. lang mit 50 l/h. | | | |

Dabei wurden beim Aufheizen auf 450°C weiße Dämpfe und bei 450°C Wasserabspaltung; bei der Sauerstoffbehandlung weiße Dämpfe; bei der H₂/N₂-Behandlung bei 850°C zuerst weiße, dann rote, dann dunkelbraune Dämpfe sowie Wasserabspaltung; sowie bei der Cl₂-Behandlung hellbraungraue Dämpfe beobachtet. Der Gewichtsverlust betrug 45,9 Gew.-%.
2) Oxidierende Säurelaugung des Rückstands: Der Rückstand wurde 3 Stunden lang in HCl conc. am Rückfluß gekocht unter Durchleiten von Cl₂. Nach 3 Stunden wurde ein Potential der Lösung von 1053 mV gemessen. Die Lösung wurde durch Filtern vom Ungelösten getrennt, mit Wasser 1:1 verdünnt und der Goldanteil durch Laufenlassen der Lösung über eine Amberlite XAD7-Säule abgetrennt. Die Restlösung wurde erneut durch 2 Stunden Rückflußkochen unter Durchperlen von Cl₂ oxidiert und als Feed mit 1 ml/min einer CAC-Säule aufgegeben, die mit Toyopearl HW 40 F beschickt war und mit 1 mol/l HCl (15 ml/min) eluiert wurde.
Typ: Bett rotiert gegenüber Feed und Fraktionensammler
Bettdicke: 0,65 cm
Betthöhe: 38,0 cm
Bettquerschnitt: 24,4 cm²
Rotation: 95°/h

Am Boden der Säule wurden zwei Eluatfraktionen abgenommen - die erste im Winkel von etwa 70° und die zweite im Winkel von etwa 140° gegenüber der Feedstelle, die gegenüber dem Feed folgende Zusammensetzung jeweils in mg/l aufweisen:

**Tabelle 2**

| | Ausgangsmaterial [mg/l] | 1. Fraktion [mg/l] | 2. Fraktion [mg/l] |
|---|---|---|---|
| Ag | 257 | < 1 | 24 |
| Ru | 5074 | 267 | 104 |
| Au | < 1 | < 1 | < 1 |
| Pd | 14991 | < 1 | 4230 |
| Pt | 11516 | < 1 | < 1 |
| Ir | 3382 | 172 | 89 |
| Rh | 9485 | 5159 | < 1 |
| Fe | 29 | 1 | < 1 |
| Cu | 59 | 17 | < 1 |
| Ni | 46 | 28 | < 1 |
| Co | 2 | < 1 | < 1 |
| Pb | 3 | < 1 | < 1 |
| Zn | 1 | 2 | < 1 |
| Si | 23 | 2 | 6 |
| Se | 51 | 5 | 8 |
| Te | 17 | 3 | < 1 |
| As | 20 | < 1 | < 1 |
| P | 24 | 8 | 3 |
| Re | 4 | < 1 | < 1 |

Man erkennt, daß Rhodium in die erste Fraktion und Palladium in die zweite Fraktion geht, bei dieser Fahrweise also diese beiden Metalle voneinander trennbar sind. Pt wird an der Säule festgehalten.

## Patentansprüche

1. Verfahren zum Aufarbeiten von edelmetallhaltigen Materialien, insbesondere von metallurgischen Primärkonzentraten, bei dem die Materialien bei erhöhter Temperatur in der Reihenfolge einer oxidierenden Behandlung, einer reduzierenden Behandlung und einer Chlorierung unter Einsatz von gasförmigen Behandlungsmedien unterzogen werden, wobei Gold und die Platingruppenmetalle im Rückstand verbleiben, **dadurch gekennzeichnet, daß** der Rückstand in bekannter Weise einer oxidierenden Säurelaugung unterzogen, aus der flüssigen Phase zuerst der Goldanteil chromatographisch abgetrennt und die verbleibende Flüssigkeit dann chromatographisch in die einzelnen Platingruppenmetalle fraktioniert wird, wobei die Fraktionierung unter Relativbewegung zwischen einem Teilchenbett in Form eines Zylindermantels und mindestens einer Aufgabestelle für die Flüssigkeit durchgeführt und die verbleibende Flüssigkeit vor der Fraktionierung auf ein Redoxpotential größer als 700 mV oxidiert wird.

2. Verfahren nach Anspruch 1, **dadurch gekennzeichnet, daß** die verbleibende Flüssigkeit vor der Fraktionierung auf ein Redoxpotential von 800 bis 1200 mV oxidiert wird.

3. Verfahren nach Anspruch 1 oder 2, **dadurch gekennzeichnet, daß** das Oxidieren der verbleibenden Flüssigkeit vor der Fraktionierung auf elektrochemischem Weg durchgeführt wird.

4. Verfahren nach einem der Ansprüche 1 bis 3, **dadurch gekennzeichnet, daß** die Goldabtrennung an einem Vinylstyrolharz durchgeführt wird.

5. Verfahren nach einem der Ansprüche 1 bis 4, **dadurch gekennzeichnet, daß** die Fraktionierung an einem Gel eines Polysaccharids vom Dextrantyp, an einem vernetzten Polymethacrylatgel oder an einem vernetzten Polyacrylamidgel durchgeführt wird.

6. Verfahren nach einem der Ansprüche 1 bis 5, **dadurch gekennzeichnet, daß** die oxidierende Säurelaugung mit chlorgashaltiger Salzsäure durchgeführt wird.

## Claims

1. A process for dressing materials containing precious metals, in particular metallurgical primary concentrates, wherein the materials are subjected to an oxidising treatment, a reducing treatment and chlorination using gaseous treatment media in this order at elevated temperatures, gold and the platinum group metals remaining in the residue, **characterised in that** the residue is subjected to conventional oxidative leaching with acid, **in that** the gold is first separated from the liquid phase by chromatography, and **in that** the remaining liquid is then fractionated into the individual platinum group metals by chromatography, fractionating being carried out under relative movement between a particle bed taking the form of a cylinder jacket and at least one application site for the liquid, and the remaining liquid is oxidised to a redox potential higher than 700 mV before fractionating it.

2. The process according to claim 1, **characterised in that** the remaining liquid is oxidised to a redox potential of 800 to 1.200 mV before fractionating it.

3. The process according to claim 1 or claim 2, **characterised in that** oxidation of the remaining liquid is carried out electrochemically before fractionating it.

4. The process according to any of claims 1 to 3, **characterised in that** the gold is separated on a vinylstyrene resin.

5. The process according to any of claims 1 to 4, **characterised in that** fractionating is carried out on a gel of a dextran-type polysaccharide, on a cross-linked polymethacrylate gel, or on a cross-linked polyacrylamide gel.

6. The process according to any of claims 1 to 5, **characterised in that** the oxidative leaching with acid is carried out with hydrochloric acid containing chlorine gas.

## Revendications

1. Processus de traitement de matières contenant des métaux précieux, en particulier de concentrés primaires métallurgiques, dans lequel les matières sont soumises à un traitement d'oxydation, à un traitement de réduction et à une chloration en utilisant des agents de traitement gazeux, dans l'ordre donné, de l'or et les métaux du groupe platine restant dans le résidu, **caractérisé en ce que** le résidu est soumis à une élution oxydative avec un acide, l'or étant d'abord séparé de la phase liquide par chromatographie, et le liquide résiduel étant par la suite fractionné par chromatographie pour obtenir les métaux du groupe platine individuels, le fractionnement étant effectué sous mouvement relatif entre un lit de particules sous forme d'une nappe cylindrique et au moins un point de chargement pour le liquide, et le liquide résiduel étant oxydé à un potentiel redox supérieure à 700 mV avant le fractionnement.

2. Le processus selon la revendication 1, **caractérisé en ce que** le liquide résiduel est oxydé à un potentiel redox de 800 à 1200 mV avant le fractionnement.

3. Le processus selon la revendication 1 ou 2, **caractérisé en ce que** l'oxydation du liquide résiduel est effectuée avant le fractionnement par voie électrochimique.

4. Le processus selon l'une des revendications 1 à 3, **caractérisé en ce que** la séparation d'or et effectuée sur une résine de styrène vinylique.

5. Le processus selon l'une des revendications 1 à 4, **caractérisé en ce que** le fractionnement est effectué sur un gel d'un polysaccharide du type dextrane, sur un gel de polyméthacrylate réticulé ou sur un gel de polyacrylamide réticulé.

6. Le processus selon l'une des revendications 1 à 5, **caractérisé en ce que** l'élution oxydative avec une acide est effectuée avec de l'acide chlorhydrique contenant du gaz chloré.
